# EUROPEAN PATENT APPLICATION

(11) **EP 3 901 198 A1**
(43) Date of publication of application: **27.10.2021**
(21) Application number: 20171133.0
(22) Date of filing: 23.04.2020
(51) Int. Cl.: C08J 5/18, C08J 5/00, C08J 3/20, C08K 3/04, H04R 1/10

(54) **GRAPHENE PLASTIC FILM AND MANUFACTURING METHOD THEREOF**

(71) Applicant: Amazing Cool Technology Corp, Taipei 115 (TW); Tseng, Wei-Lin, Taipei 115 (TW)
(72) Inventor: TSENG, Wei-Lin, 115 Taipe (TW); SHIH, Yang-Ming, 115 Taipe (TW); CHAN, Chia-Lang, 115 Taipe (TW); HSU, Chia-Ming, 115 Taipe (TW)
(74) Representative: Patentanwälte Bals & Vogel

(57) **Abstract**

A method for manufacturing a graphene plastic film includes the steps of providing plastic particles and graphene powder, mixing the plastic particles with the graphene powder in a weight ratio not greater than 2% to form a mixed material, heating the mixed material to form a melted material (100), pressing the melted material (100) to form a graphene plastic sheet (210), and radially stretching a periphery of the graphene plastic sheet (210) to expand and thin the graphene plastic sheet (210) to form a graphene plastic film (220). By adding graphene to the mixed material, physical properties of the graphene plastic film (220) can be enhanced. In comparison with the current technology, it is easier to be manufactured and wider to be applied.

## Description

### BACKGROUND OF THE INVENTION

### Technical Field

The invention relates to graphene plastic films, particularly to a manufacturing method of graphene plastic film by adding graphene into a plastic film.

### Related Art

Plastic films are usually soft, so their applications are limited. Physical properties of a plastic film must be enhanced depending on different requirements. For an earphone diaphragm, in current technology, the rigidity of plastic film is not enough, so it uses a paper support to support its outline and then a coating is disposed on a surface of the plastic film to increase rigidity. However, because the coating and the plastic film have different flexibility, stretching after coating will cause inconsistence of deformation at different portions. Thus, only coating after forming is available. Manufacturing in both the support and the coating increases and the costs are expensive.

In view of this, the inventors have devoted themselves to the above-mentioned prior art, researched intensively and cooperated with the application of science to try to solve the above-mentioned problems, which has become the goal of the inventors' improvement.

### SUMMARY OF THE INVENTION

The invention provides a manufacturing method of graphene plastic film by adding graphene into a plastic film.

The invention provides a method for manufacturing a graphene plastic film, which includes the steps of providing plastic particles and graphene powder, mixing the plastic particles with the graphene powder in a weight ratio not greater than 2% to form a mixed material, heating the mixed material to form a melted material, pressing the melted material to form a graphene plastic sheet, and radially stretching a periphery of the graphene plastic sheet to expand and thin the graphene plastic sheet to form a graphene plastic film.

In the method for manufacturing a graphene plastic film of the invention, a weight ratio of the graphene powder in the mixed material is between 500 and 1500 ppm.

In the method for manufacturing a graphene plastic film of the invention, the graphene powder comprises graphene micro-chips, and the graphene micro-chips in the melted material are connected by side chains of graphene molecule to expand. The side chain is polyamide (PA). Each of at least 95% weight of the graphene micro-chips is less than 45µm in diameter. The graphene micro-chips which are connected and expanded are laminatedly distributed in the graphene plastic film. The melted material comprises a plastic carrier formed by the plastic particles which are melted, and the graphene micro-chips are mixed into the plastic carrier.

The method for manufacturing a graphene plastic film of the invention further includes a step of placing the graphene plastic film in a mold for molding.

The invention provides a graphene plastic film includes a plastic carrier, being of a shape of film; and graphene micro-chips, connected with each other to extend and laminatedly distributed in the plastic carrier.

In the graphene plastic film of the invention, the graphene micro-chips are laminated with less than 15 layers.

The invention adds graphene in the mixed material to increase physical properties of the graphene plastic film, so it can be easier to be manufactured and applied in more applications.

### BRIEF DESCRIPTION OF THE DRAWINGS

FIG. 1 is a flowchart of the method for manufacturing a graphene plastic film of the invention;
FIGS. 2-5 are schematic views of the steps of the method for manufacturing a graphene plastic film of the invention;
FIG. 6 is a schematic view of distribution of graphene micro-chips in a graphene plastic film of the invention;
FIGS. 7-9 are schematic views of the molding step of the method for manufacturing a graphene plastic film of the invention; and
FIG. 10 is a schematic view of a diaphragm of a conventional earphone.

### DETAILED DESCRIPTION OF THE INVENTION

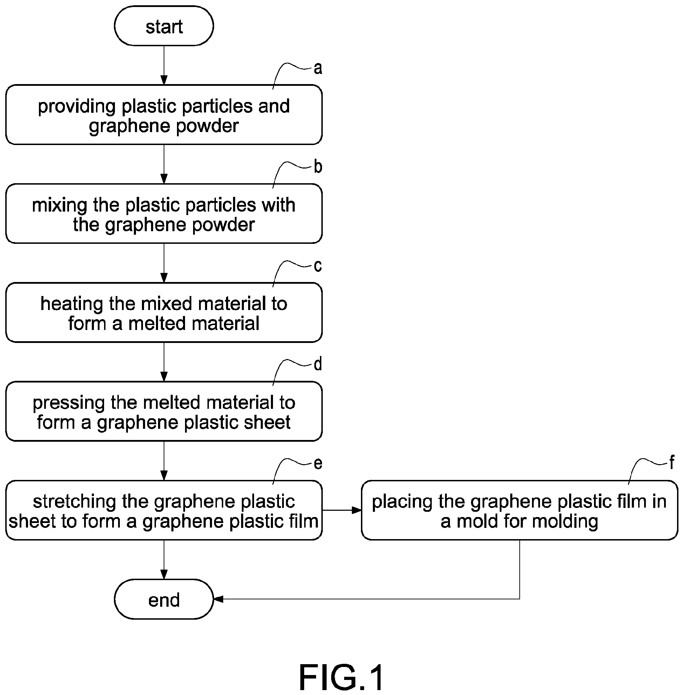

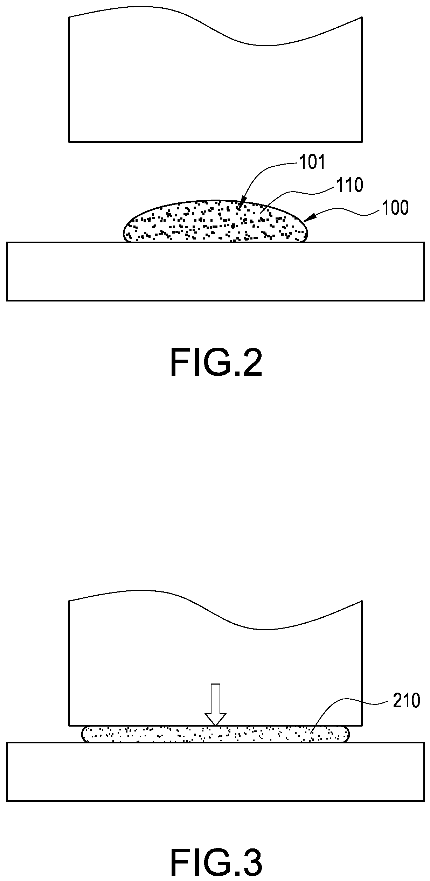

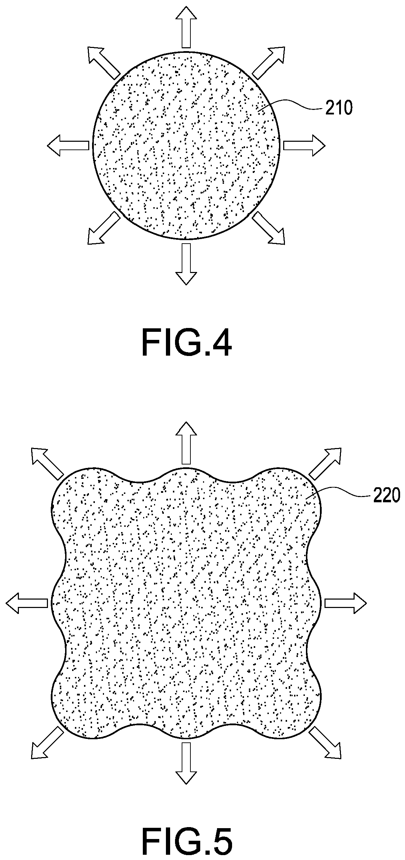

Please refer to FIGS. 1-6. The invention provides a method for manufacturing a graphene plastic film, which includes the following steps.

In step a), provide plastic particles and graphene powder. The plastic particles may be nylon (PA66 or PA6), polycarbonate (PC), polyethylene terephthalate (PET), acrylonitrile butadiene styrene, (ABS), polymethyl methacrylate (PMMA), polyether ether ketone (PEEK), polyether ketone (PEK), or polyethylene naphthalate two formic acid glycol ester (PEN). The graphene powder includes graphene micro-chips 101. Each of at least 95% weight of the graphene micro-chips 101 is less than 45µm in diameter.

After step a), in step b) of mixing, mix the plastic particles with the graphene powder to form a mixed material. In detail, the graphene powder is mixed into the plastic particles in a weight ratio not greater than 2% and is stirred at room temperature. In this embodiment, a weight ratio of the graphene powder in the mixed material is preferably between 100 and 1500 ppm.

Please refer to FIGS. 1, 2 and 6. After step b), in step c) of melting, heat the mixed material to form a melted material 100. In detail, when the mixed material is being melted, the plastic particles therein are melted to form a plastic carrier 110 and the graphene micro-chips 101 in the graphene powder are mixed into the plastic carrier 110. The graphene micro-chips 101 in the melted material 100 are connected by side chains 102 of graphene molecule to expand. Preferably, the side chain 102 is polyamide (PA).

Please refer to FIGS. 1, 3, 4 and 6. After step c), in step d) of pressing, press the melted material 100 to form a graphene plastic sheet 210, thereby the graphene micro-chips 101 are laminatedly distributed in the melted material 100.

Please refer to FIGS. 1 and 4-6. After step d), in step e) of stretching, radially stretch a periphery of the graphene plastic sheet 210 to expand and thin the graphene plastic sheet 210 to form a graphene plastic film 220. The graphene plastic film 220 can be stretched to a required thickness. Also, the graphene micro-chips 101 which are connected and expanded are laminatedly distributed in the graphene plastic film 220.

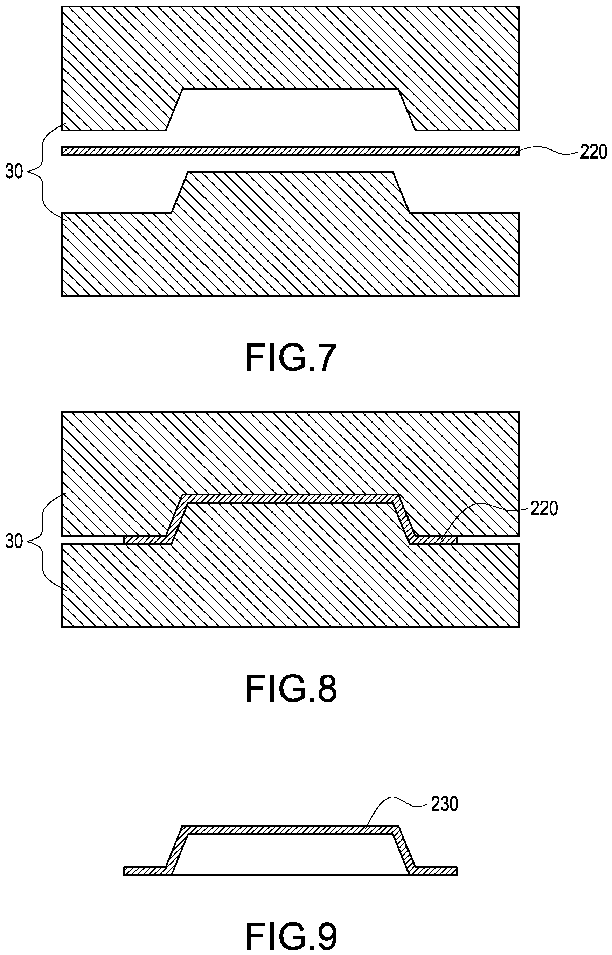

Please refer to FIGS. 1 and 7-9. Preferably, the method for manufacturing a graphene plastic film of the invention may include a molding step f) after step e) according to using requirements. In step f), the graphene plastic film 220 is placed in a mold 30. In the embodiment, the graphene plastic film 220 can be preferably formed into a bowl shape to serve as an earphone diaphragm.

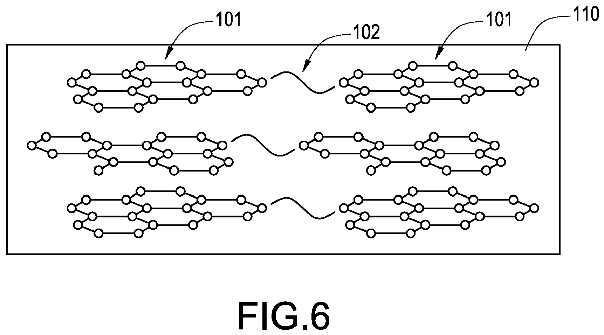

Please refer to FIG. 6. The graphene plastic film 220 made by the method of the invention includes a plastic carrier 110 and graphene micro-chips 101. The plastic carrier 110 is of a shape of film. The graphene micro-chips 101 are laminatedly distributed in the melted material 100. Also, the graphene micro-chips 101 are laminated with less than 10 layers.

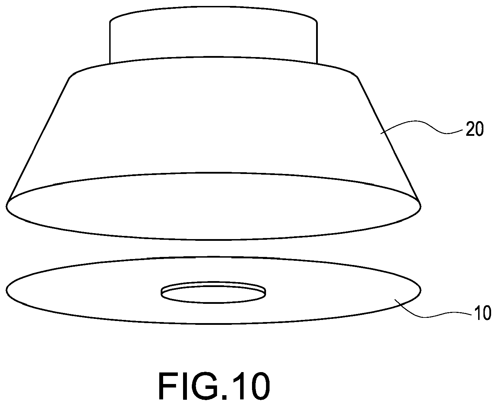

Graphene is added into the mixed material in weight ratio of 500-950 ppm to enhance rigidity of the plastic film, which is suitable for an earphone diaphragm. The enhancement of rigidity of the plastic film make the plastic film not easy to generate resonance when vibrating at high frequency. As a result, high frequency noise can be reduced. However, a high graphene content will make the graphene too fragile to be suitable for earphones. Further, in the current technology as shown in FIG. 10, the rigidity of plastic film is not enough, so it uses a paper support to support its outline and then a coating is disposed on a surface of the plastic film to increase rigidity. However, because the coating and the plastic film have different flexibility, stretching after coating will cause inconsistence of deformation at different portions. Thus, only coating after forming is available. Manufacture of both the support and the coating increases. However, the invention adds graphene into the mixed material in weight ratio of 500-950 ppm to make the graphene plastic film 220 have sufficient rigidity to be directly formed into a bowl-shaped diaphragm 230 by a mold 30. As a result, the manufacturing is simplified, the coating process can be omitted and the overall volume of the diaphragm 230 can be effectively reduced.

In addition, the graphene plastic film 220 of the invention is made by adding graphene. In comparison with the conventional one made by coating, the graphene plastic film 220 of the invention can be used in more applications. Adding graphene with different concentrations according to different requirements can change physical properties of the plastic film. Thus, the physical properties are not limited to the abovementioned rigidity. The following description takes two applications of changing light reflectivity and capacitance.

The different number of graphene lamination can change the reflectivity to infrared and ultraviolet rays. In the embodiment, the average number of graphene lamination is preferably between 2 and 5. Adding graphene into the mixed material in weight ratio of 900-1000 ppm can increase the reflectivity to infrared and ultraviolet rays to be applied to car window film. Adding a small amount of graphene into the carrier 110 can generate great reflectivity to infrared and ultraviolet rays. Also, graphene is transparent and colorless, so it can be used to manufacture car window film with high transmittance and great heat rejection. However, insufficiently adding graphene will cause insufficiency of coverage.

Graphene has high electron mobility, so its resistance is low and it can serve as a capacitor. Adding graphene into the mixed material in weight ratio of 1000-5000 ppm can be applied to electrode separator film in a lithium battery.

## Claims

1. A method for manufacturing a graphene plastic film, comprising:
a) providing plastic particles and graphene powder;
b) mixing the plastic particles with the graphene powder in a weight ratio not greater than 2% to form a mixed material;
c) heating the mixed material to form a melted material (100);
d) pressing the melted material (100) to form a graphene plastic sheet (210); and
e) radially stretching a periphery of the graphene plastic sheet (210) to expand and thin the graphene plastic sheet (210) to form a graphene plastic film (220).

2. The method of claim 1, wherein a weight ratio of the graphene powder in the mixed material is between 500 and 1500 ppm.

3. The method of claim 1, wherein the graphene powder comprises graphene micro-chips (101), and the graphene micro-chips (101) in the melted material (100) are connected by side chains (102) of graphene molecule to expand.

4. The method of claim 3, wherein the side chain (102) is polyamide (PA).

5. The method of claim 3, wherein each of at least 95% weight of the graphene micro-chips (101) is less than 45µm in diameter.

6. The method of claim 3, wherein the graphene micro-chips (101) which are connected and expanded are laminatedly distributed in the graphene plastic film (220).

7. The method of claim 6, wherein the melted material (100) comprises a plastic carrier (110) formed by the plastic particles which are melted, and the graphene micro-chips (101) are mixed into the plastic carrier (110).

8. The method of claim 1, further comprising a step of:
f) placing the graphene plastic film (220) in a mold for molding.

9. A graphene plastic film (200) comprising:
a plastic carrier (110), being of a shape of film; and
graphene micro-chips (101), connected with each other to extend and laminatedly distributed in the plastic carrier (110).

10. The graphene plastic film (200) of claim 9, wherein the graphene micro-chips (101) are laminated with less than 10 layers.

## Amended claims

### Amended claims in accordance with Rule 137(2) EPC.

1. A method for manufacturing a graphene plastic film, comprising:
a) providing plastic particles and graphene powder;
b) mixing the plastic particles with the graphene powder in a weight ratio of the graphene powder based on the total weight of the plastic particles and the graphene powder not greater than 2% to form a mixed material;
c) heating the mixed material to form a melted material (100);
d) pressing the melted material (100) to form a graphene plastic sheet (210); and
e) radially stretching a periphery of the graphene plastic sheet (210) to expand and thin the graphene plastic sheet (210) to form a graphene plastic film (220),
wherein the graphene powder comprises graphene micro-chips (101), and the graphene micro-chips (101) in the melted material (100) are connected by side chains (102) of graphene molecule to expand,
wherein the side chain (102) is polyamide (PA),
wherein each of at least 95% weight of the graphene micro-chips (101) is less than 45µm in diameter,
wherein the graphene micro-chips (101) which are connected and expanded are laminatedly distributed in the graphene plastic film (220).

2. The method of claim 1, wherein a weight ratio of the graphene powder in the mixed material is between 500 and 1500 ppm.

3. The method of claim 6, wherein the melted material (100) comprises a plastic carrier (110) formed by the plastic particles which are melted, and the graphene micro-chips (101) are mixed into the plastic carrier (110).

4. The method of claim 1, further comprising a step of: f) placing the graphene plastic film (220) in a mold for molding.

5. A graphene plastic film (200) comprising:
a plastic carrier (110), being of a shape of film; and
graphene micro-chips (101), connected with each other to extend and laminatedly distributed in the plastic carrier (110).

6. The graphene plastic film (200) of claim 5, wherein the graphene micro-chips (101) are laminated with less than 10 layers.
